# EUROPEAN PATENT APPLICATION

(11) **EP 3 786 921 A1**
(43) Date of publication of application: **03.03.2021**
(21) Application number: 19791849.3
(22) Date of filing: 23.04.2019
(51) Int. Cl.: G08G 1/16, B60W 30/10, G08G 1/00

(54) **DRIVING ASSISTANCE DEVICE AND TRAFFIC SYSTEM**

(30) Priority: 27.04.2018 JP 2018086884
(71) Applicant: HINO MOTORS, LTD., Hino-shi, Tokyo 191-8660 (JP); Isuzu Motors Limited, Tokyo 140-8722 (JP)
(72) Inventor: YASUI Hirofumi, Hino-shi, Tokyo 191-8660 (JP); HIBI Motoaki, Hino-shi, Tokyo 191-8660 (JP); SEKINE Takaaki, Hino-shi, Tokyo 191-8660 (JP); YAMAGUCHI Masahiro, Hino-shi, Tokyo 191-8660 (JP); AMINO Masato, Hino-shi, Tokyo 191-8660 (JP)
(74) Representative: D Young & Co LLP
(86) International application number: PCT/JP2019/017283
(87) International publication number: WO 2019/208585

(57) **Abstract**

A driving assistance device includes a guide line detecting unit, a remaining distance acquiring unit, and a braking control unit and controls driving of a vehicle on the basis of a guide line leading to a scheduled stop position. The guide line includes a base-point mark which is provided at a position which is separated a first distance from the scheduled stop position. The guide line detecting unit detects the base-point mark at a measurement position of a captured image and sets the detected position of the base-point mark at the measurement position of the captured image as the center of the base-point mark in an extending direction of the guide line when the base-point mark is detected at the measurement position of the captured image. The remaining distance acquiring unit acquires the remaining distance on the basis of the position of the base-point mark set by the guide line detecting unit.

## Description

### Technical Field

The present invention relates to a driving assistance device and a traffic system that control driving of a vehicle on the basis of a guide line leading to a scheduled stop position.

### Background Art

In the related art, a driving assistance device described in Patent Literature 1 is known as a driving assistance device that controls driving of a vehicle on the basis of a guide line leading to a scheduled stop position. The driving assistance device described in Patent Literature 1 performs steering control and deceleration control of a fixed-route bus along a guide line and stops the fixed-route bus at a bus stop when the guide line marked on a road surface is detected.

### Citation List

### Patent Literature

[Patent Literature 1] Japanese Unexamined Patent Publication No. 2017-196967

### Summary of Invention

### Technical Problem

For example, a means that adds a base-point mark to the guide line is conceivable as a means that acquires a remaining distance to a scheduled stop position of a vehicle. In this means, a distance from the scheduled stop position to the base-point mark is registered in advance. When the base-point mark is detected at a measurement position of a captured image of a camera, the registered distance is acquired as the remaining distance to the scheduled stop position of the vehicle.

However, in a state in which a vehicle speed is high, it is not possible to accurately detect a position of a base-point mark due to limitation of a refresh rate (a frame rate) of a camera. For example, when a base-point mark can be detected only once due to the refresh rate of the camera, which part of the base-point mark a detected position corresponds to cannot be specified. Accordingly, there is an error corresponding to the total length of the base-point mark between when a front end of the base-point mark has been detected and when a rear end of the base-point mark has been detected.

Therefore, an objective of the invention is to provide a driving assistance device and a traffic system that can decrease a maximum error of a detected position of a base-point mark.

### Solution to Problem

A driving assistance device according to the invention is a driving assistance device that controls driving of a vehicle on the basis of a guide line leading to a scheduled stop position, the driving assistance device including: a guide line detecting unit configured to detect the guide line from a captured image of a camera; a remaining distance acquiring unit configured to acquire a remaining distance to the scheduled stop position of the vehicle; and a braking control unit configured to control deceleration of the vehicle on the basis of the remaining distance acquired by the remaining distance acquiring unit such that the vehicle stops at the scheduled stop position, wherein the guide line is constituted of a plurality of segments which are separated in an extending direction of the guide line and includes a base-point mark which is provided at a position which is separated a first distance from the scheduled stop position, wherein the guide line detecting unit detects the base-point mark at a measurement position of the captured image, and sets a detected position of the base-point mark at the measurement position of the captured image as a center of the base-point mark in the extending direction of the guide line when the base-point mark is detected at the measurement position of the captured image, and wherein the remaining distance acquiring unit acquires the remaining distance on the basis of the position of the base-point mark set by the guide line detecting unit.

In the driving assistance device, since the remaining distance acquiring unit acquires the remaining distance on the basis of the base-point mark detected by the guide line detecting unit, it is possible to accurately stop the vehicle at the scheduled stop position. When the base-point mark is detected at the measurement position of the captured image, the guide line detecting unit sets the detected position of the base-point mark at the measurement position of the captured image as the center of the base-point mark in the extending direction of the guide line. Accordingly, even when the base-point mark is detected only once due to a refresh rate of the camera, the set position of the base-point mark is always the center of the base-point mark in the extending direction of the guide line. Accordingly, a maximum error of the detected position of the base-point mark is a length corresponding to half the length of the base-point mark. Accordingly, it is possible to decrease the maximum error of the detected position of the base-point mark.

The guide line may be formed of a pair of dotted lines which are parallel to each other, and the base-point mark may be included in each of the pair of dotted lines. In the driving assistance device, the guide line is formed of a pair of dotted lines which are parallel to each other, and the base-point mark is included in each of the pair of dotted lines. Accordingly, it is possible to easily distinguish the guide line from other marking lines and to appropriately detect the base-point mark.

The base-point mark may have a line width greater than a line width of the segments constituting the guide line. In the driving assistance device, the base-point mark is marked with a line width greater than the line width of the segments constituting the guide line. Accordingly, it is possible to simplify the shape of the base-point mark and to secure easy detection of the base-point mark from a captured image.

The guide line may include a correction base-point mark that is provided at a position which is separated a second distance less than the first distance from the scheduled stop position, the guide line detecting unit may detect the correction base-point mark at the measurement position of the captured image and set a detected position of the correction base-point mark at the measurement position of the captured image as a center of the correction base-point mark in the extending direction of the guide line, and the remaining distance acquiring unit may correct the remaining distance on the basis of the detected position of the correction base-point mark set by the guide line detecting unit and a correction factor which is calculated from a relationship between a distance from the base-point mark to the correction base-point mark and a summed distance obtained according to rotation of wheels of the vehicle in the meantime. In the driving assistance device, the remaining distance acquiring unit corrects the remaining distance on the basis of the detected position of the correction base-point mark detected by the guide line detecting unit and the correction factor which is calculated from the relationship between the distance from the base-point mark to the correction base-point mark and the summed distance obtained according to the rotation of the wheels of the vehicle in the meantime. Accordingly, it is possible to more accurately stop the vehicle at the scheduled stop position. When the correction base-point mark is detected at the measurement position of the captured image, the guide line detecting unit sets the detected position of the correction base-point mark at the measurement position of the captured image as the center of the correction base-point mark in the extending direction of the guide line. Accordingly, even when the correction base-point mark is detected only once due to a refresh rate of the camera, the set position of the correction base-point mark is always the center of the correction base-point mark in the extending direction of the guide line. Accordingly, a maximum error of the detected position of the correction base-point mark is a length corresponding to half the length of the correction base-point mark. Accordingly, it is possible to decrease the maximum error of the detected position of the correction base-point mark.

The driving assistance device may further include a steering control unit configured to control steering of the vehicle on the basis of the guide line acquired by the guide line detecting unit. In the driving assistance device, the steering control unit controls steering of the vehicle on the basis of the guide line. Accordingly, it is possible to more accurately stop the vehicle at the scheduled stop position.

A traffic system according to the invention is a traffic system including a guide line leading to a scheduled stop position and a driving assistance device configured to stop a vehicle at the scheduled stop position on the basis of the guide line, wherein the guide line is constituted of a plurality of segments which are separated in an extending direction of the guide line and includes a base-point mark which is provided at a position which is separated a first distance from the scheduled stop position, wherein the driving assistance device includes: a guide line detecting unit configured to detect the guide line from a captured image of a camera; a remaining distance acquiring unit configured to acquire a remaining distance to the scheduled stop position of the vehicle; and a braking control unit configured to control deceleration of the vehicle on the basis of the remaining distance acquired by the remaining distance acquiring unit such that the vehicle stops at the scheduled stop position, wherein the guide line detecting unit sets a position of the base-point mark detected at a measurement position of the captured image as a center of the base-point mark in the extending direction of the guide line when the base-point mark is detected at the measurement position of the captured image, and wherein the remaining distance acquiring unit acquires the remaining distance on the basis of the position of the base-point mark set by the guide line detecting unit.

In the traffic system, since the remaining distance acquiring unit acquires the remaining distance on the basis of the base-point mark detected by the guide line detecting unit, it is possible to accurately stop the vehicle at the scheduled stop position. When the base-point mark is detected at the measurement position of the captured image, the guide line detecting unit sets the detected position of the base-point mark at the measurement position of the captured image as the center of the base-point mark in the extending direction of the guide line. Accordingly, even when the base-point mark is detected only once due to a refresh rate of the camera, the set position of the base-point mark is the center of the base-point mark in the extending direction of the guide line. Accordingly, a maximum error of the detected position of the base-point mark is a length corresponding to half the length of the base-point mark. Accordingly, it is possible to decrease the maximum error of the detected position of the base-point mark.

### Advantageous Effects of Invention

According to the invention, it is possible to decrease a maximum error of a detected position of a base-point mark.

### Brief Description of Drawings

FIG. 1 is a block diagram illustrating a functional configuration of a driving assistance device according to an embodiment.
FIG. 2 is a plan view illustrating a traffic system according to the embodiment.
FIG. 3(a) is a diagram illustrating an example of a captured image of a camera, and FIG. 3(b) is a diagram illustrating a detected position of a base-point mark at a measurement position of the captured image.
FIGS. 4(a) to (c) are diagrams illustrating a relationship between a base-point mark and a measurement position of a captured image.
FIGS. 5(a) to 5(c) are diagrams illustrating setting (correction) of a detected position of a base-point mark which is performed by a base-point mark detecting unit.
FIG. 6 is a flowchart illustrating an operation of the driving assistance device according to the embodiment.

### Description of Embodiments

Hereinafter, an exemplary embodiment of the invention will be described in detail with reference to the accompanying drawings. In the following description, the same or similar elements will be referred to by the same reference signs and description thereof will not be repeated.

### [Traffic system]

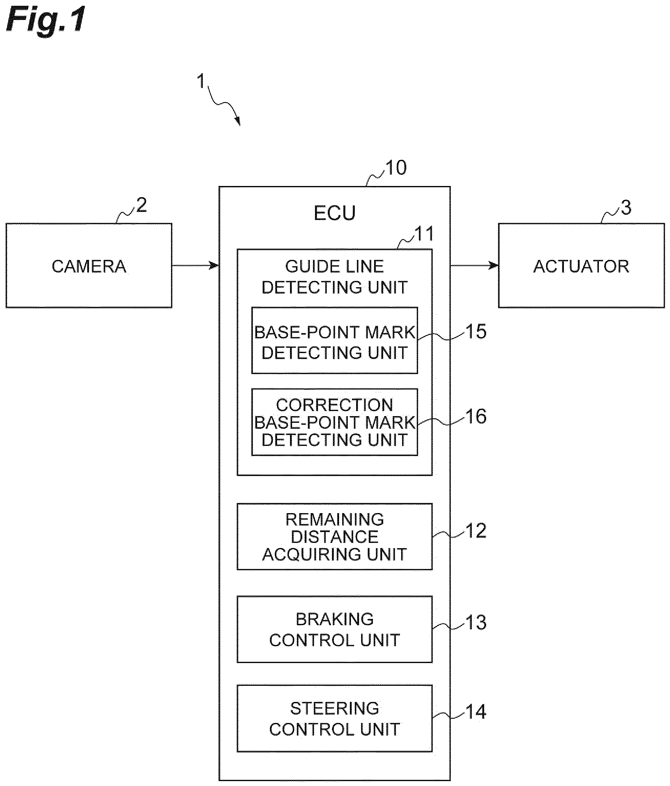

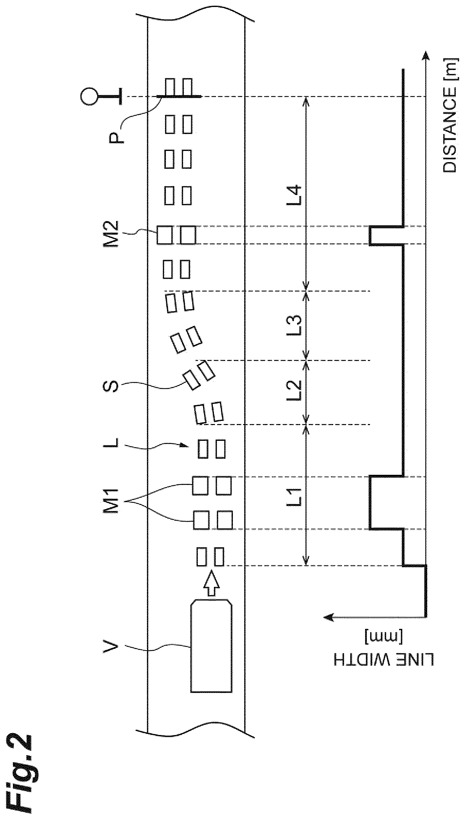

FIG. 1 is a block diagram illustrating a functional configuration of a driving assistance device according to an embodiment. FIG. 2 is a plan view illustrating a traffic system according to the embodiment. As illustrated in FIGS. 1 and 2, a driving assistance device 1 is a device that controls driving of a vehicle V on the basis of a guide line L leading to a scheduled stop position P. The driving assistance device 1 is mounted in a vehicle V of which driving is to be controlled. The vehicle V and the scheduled stop position P are not particularly limited, and it is assumed that the vehicle V is a fixed-route bus and the scheduled stop position P is a bus stop in this embodiment.

### [Guide line]

As illustrated in FIG. 2, a guide line L is a line for guiding a vehicle V traveling in a travel lane to a scheduled stop position P which is provided on a road shoulder (or the vicinity of the road shoulder). The guide line L is marked on a road surface of the travel lane. When there are two or more travel lanes, the guide line L is marked on a road surface of the travel lane which is located closest to the road shoulder. The guide line L is constituted of a plurality of segments S which are separated in an extending direction of the guide line L such that the guide line can be distinguished from other marking lines. More specifically, the guide line L includes a pair of dotted lines which are parallel to each other, and each of the pair of dotted lines includes a plurality of segments S which are separated in the extending direction of the dotted line. A segment S has a rectangular shape which is long in the extending direction in each dotted line.

The guide line L includes a first straight portion L1 that is located at an end opposite to the scheduled stop position P, a first curved portion L2 extending from the first straight portion L1, a second curved portion L3 extending from the first curved portion L2, and a second straight portion L4 extending from the second curved portion L3 and leading to the scheduled stop position P. The first straight portion L1 is formed of a straight line which is parallel to a travel lane. The first curved portion L2 is formed of a curve with a center of curvature on a road shoulder side (for example, a cycloid curve). The second curved portion L3 is formed of a curve with a center of curvature on a side opposite to the road shoulder (for example, a cycloid curve). Accordingly, the first curved portion L2 and the second curved portion L3 have curvatures which are opposite to each other. The second straight portion L4 is formed of a straight line parallel to the road shoulder (the travel lane). That is, the guide line L guides the vehicle V such that the vehicle travels along the travel lane in the first straight portion L1, then guides the vehicle V such that the vehicle approaches the road shoulder in the first curved portion L2 and the second curved portion L3, and then guides the vehicle V such that the vehicle travels along the road shoulder to the scheduled stop position P in the second straight portion L4.

The first straight portion L1 includes a base-point mark M1. The base-point mark M1 is a mark which is provided at a position which is separated a first distance D1 from the scheduled stop position P. The base-point mark M1 is formed by setting one or more of a plurality of segments S constituting the guide line L to a different shape. In FIG. 2, two segments S in the extending direction of the guide line L are formed as the base-point marks M1. That is, in FIG. 2, each of a pair of dotted lines constituting the guide line L includes two base-point marks M1. The shape of the base-point mark M1 is not particularly limited as long as it can be distinguished from the segments S constituting the guide line L, and, for example, may be a shape formed by increasing a line width of the segments S constituting the guide line L. In this case, the line width of the base-point mark M1 may be set to, for example, 1.3 times to 2.0 times the line width of the segments S constituting the guide line L.

The second straight portion L4 includes a correction base-point mark M2. The correction base-point mark M2 is a mark which is provided at a position which is separated a second distance D2 less than the first distance D1 from the scheduled stop position P. The correction base-point mark M2 is formed by setting one or more of a plurality of segments S constituting the guide line L to a different shape. In FIG. 2, one segment S in the extending direction of the guide line L is formed as the correction base-point mark M2. That is, in FIG. 2, each of a pair of dotted lines constituting the guide line L includes one correction base-point mark M2. The shape of the correction base-point mark M2 is not particularly limited as long as it can be distinguished from the segments S constituting the guide line L, and, for example, may be the same shape as the base-point mark M1. The correction base-point mark M2 may be included in the second curved portion L3 instead of the second straight portion L4.

### [Driving assistance device]

As illustrated in FIG. 1, the driving assistance device 1 includes a camera 2, an actuator 3, and an electronic control unit (ECU) 10.

The camera 2 images the guide line L marked on the road surface in front of the vehicle V by imaging a front view of the vehicle V. The camera 2 is attached to, for example, a rear surface of a front windshield of the vehicle V or a front end thereof to face the road surface. The camera 2 may be a monocular camera or may be a stereo camera. The stereo camera includes, for example, two imaging units provided to reproduce binocular parallax. Imaging information of the stereo camera also includes information in the depth direction. The camera 2 transmits the captured image to the ECU 10.

The actuator 3 is a device that performs travel control of the vehicle V. The actuator 3 includes a brake actuator and a steering actuator. The brake actuator controls a brake system in accordance with a control signal from the ECU 10 and controls a braking force which is applied to wheels of the vehicle V. For example, a hydraulic brake system or an air brake system can be used as the brake system. The steering actuator is, for example, a motor actuator which is provided in a steering shaft. The steering actuator performs steering of the vehicle V by rotating the steering shaft in accordance with a control signal from the ECU 10.

The ECU 10 is an electronic control unit including a central processing unit [CPU], a read only memory [ROM], a random access memory [RAM]. The ECU 10 performs various types of control by loading a program stored in the ROM to the RAM and causing the CPU to execute the program. The ECU 10 may be constituted of a plurality of electronic control units.

The ECU 10 includes a guide line detecting unit 11, a remaining distance acquiring unit 12, a braking control unit 13, and a steering control unit 14.

The guide line detecting unit 11 detects the guide line L from a captured image of the camera 2. The guide line detecting unit 11 detects the guide line L by detecting the segments S constituting the guide line L from the captured image of the camera 2 using a technique such as pattern matching.

The guide line detecting unit 11 includes a base-point mark detecting unit 15 and a correction base-point mark detecting unit 16.

The base-point mark detecting unit 15 detects a base-point mark M1 from the captured image of the camera 2. When the base-point mark M1 has a shape obtained by increasing the line width of the segments S constituting the guide line L, the base-point mark detecting unit 15 detects the line width of the segments S constituting the guide line L on the basis of an image captured by the camera 2. When a segment with a line width greater than the line width of the segments S constituting the guide line L is detected, the detected segment is detected as the base-point mark M1. When the base-point mark M1 itself is detected, it may be determined that the base-point mark M1 has been detected. When a combined pattern of the base-point mark M1 in the traveling direction of the vehicle V and the normal segments S matches a predetermined pattern, it may be determined that the base-point mark M1 has been detected. The base-point mark detecting unit 15 will be described later in detail.

The correction base-point mark detecting unit 16 detects a correction base-point mark M2 on the basis of an image captured by the camera 2. The correction base-point mark detecting unit 16 detects the correction base-point mark M2, for example, using the same technique as used by the base-point mark detecting unit 15. The correction base-point mark detecting unit 16 will be described later in detail.

The remaining distance acquiring unit 12 acquires a remaining distance to the scheduled stop position P of the vehicle V. That is, when the guide line detecting unit 11 has detected the base-point mark M1, the remaining distance acquiring unit 12 acquires the remaining distance on the basis of the position of the base-point mark M1.

Specifically, the remaining distance from a reference position of the base-point mark M1 to the scheduled stop position P is registered in advance in the memory of the ECU 10 or the like. The registered remaining distance from the base-point mark M1 to the scheduled stop position P is also referred to as a registered distance from the base-point mark M1 to the scheduled stop position P. That is, since the base-point mark M1 has a predetermined length in the extending direction of the guide line L, a specific position of the base-point mark M1 in the extending direction of the guide line L serves as the reference position of the base-point mark M1. In this case, in view of easy specification of the reference position of the base-point mark M1, the reference position of the base-point mark M1 can be set to a front end or a rear end of the base-point mark M1 in the extending direction of the guide line L. The front end refers to an end on the scheduled stop position P side of the base-point mark M1, and the rear end refers to an end opposite to the scheduled stop position P in the base-point mark M1. In this embodiment, it is assumed that the rear end of the base-point mark M1 in the extending direction of the guide line L is set as the reference position of the base-point mark M1. When the guide line detecting unit 11 has detected the base-point mark M1, the remaining distance acquiring unit 12 reads the registered distance from the reference position of the base-point mark M1 to the scheduled stop position P from the memory and sets the read registered distance as the remaining distance to the scheduled stop position P of the vehicle V.

The remaining distance may be a direct distance between the vehicle V and the scheduled stop position P, and is preferably a remaining distance of a course along the guide line L in view of stopping the vehicle V at the scheduled stop position P with high accuracy.

When the guide line detecting unit 11 has detected the correction base-point mark M2, the remaining distance acquiring unit 12 corrects the remaining distance on the basis of the position of the correction base-point mark M2. That is, when the remaining distance acquiring unit 12 has acquired the remaining distance on the basis of the base-point mark M1, the remaining distance is decreased according to a traveling distance calculated with rotation of the wheels of the vehicle V, but there is a likelihood that the remaining distance will not be accurately calculated due to occurrence of an error based on tire wear or the like. Therefore, the remaining distance from a reference position of the correction base-point mark M2 to the scheduled stop position P is registered in advance in the memory of the ECU 10 or the like. The registered remaining distance from the correction base-point mark M2 to the scheduled stop position P is also referred to as a registered distance from the correction base-point mark M2 to the scheduled stop position P. The reference position of the correction base-point mark M2 is the same as the reference position of the base-point mark M1. After the base-point mark detecting unit 15 has detected the base-point mark M1, the remaining distance acquiring unit 12 calculates a correction factor from a relationship between the distance from the base-point mark M1 to the correction base-point mark M2 and a summed distance obtained according to the rotation of the wheels in the meantime. The distance from the base-point mark M1 to the correction base-point mark M2 can be calculated by subtracting the registered distance from the correction base-point mark M2 to the scheduled stop position P from the registered distance from the base-point mark M1 to the scheduled stop position P. When this distance is registered in the memory of the ECU 10 or the like, the distance can be acquired by reading from the memory in advance. When the guide line detecting unit 11 has detected the correction base-point mark M2, the remaining distance acquiring unit 12 reads the registered distance from the reference position of the correction base-point mark M2 to the scheduled stop position P from the memory and corrects the remaining distance to the scheduled stop position P of the vehicle V using the correction factor on the basis of the read registered distance.

The braking control unit 13 controls the deceleration of the vehicle V on the basis of the remaining distance acquired by the remaining distance acquiring unit 12 and stops the vehicle V at the scheduled stop position P. That is, the braking control unit 13 activates the actuator 3 on the basis of the remaining distance acquired by the remaining distance acquiring unit 12 to decelerate the vehicle V. Specifically, by activating a brake using the brake actuator, the vehicle V is decelerated. By this deceleration control, the vehicle V is stopped at the scheduled stop position P.

Specifically, when the guide line detecting unit 11 has detected the base-point mark M1 or the, the braking control unit 13 instructs the actuator 3 to decelerate such that the vehicle speed of the vehicle V reaches a target vehicle speed corresponding to the remaining distance acquired by the remaining distance acquiring unit 12. The actuator 3 decelerates the vehicle V such that the deceleration instructed from the braking control unit 13 is achieved.

The steering control unit 14 controls steering of the vehicle V on the basis of the guide line L acquired by the guide line detecting unit 11. That is, the steering control unit 14 controls steering of the vehicle V to travel along the guide line L acquired by the guide line detecting unit 11. Specifically, the vehicle V is steered by rotating the steering shaft using the steering actuator. Then, the vehicle V is made to travel to the scheduled stop position P along the guide line L by such steering control.

[Details of base-point mark detecting unit and correction base-point mark detecting unit]

The base-point mark detecting unit 15 and the correction base-point mark detecting unit 16 will be described below in more details.

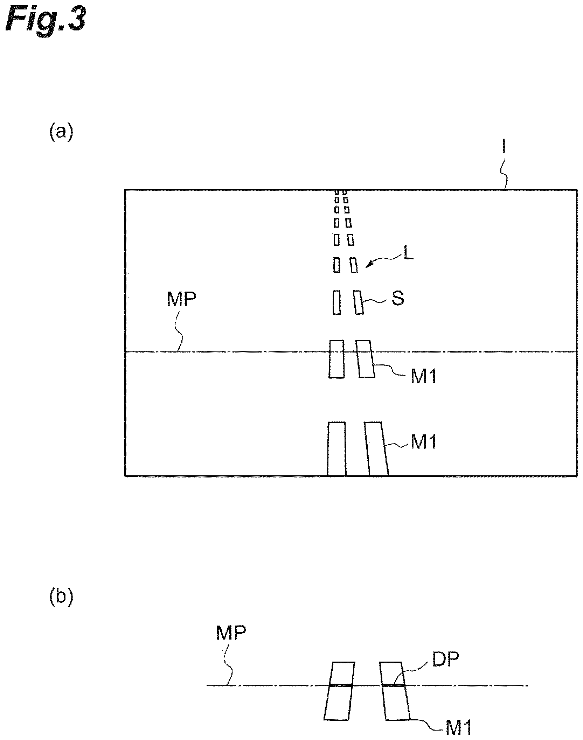

As illustrated in FIG. 3(a), the base-point mark detecting unit 15 detects a base-point mark M1 at a measurement position MP of a captured image I. The measurement position MP of the captured image I is a position corresponding to a position which is separated a predetermined distance forward from the vehicle V. That is, a position which is separated a predetermined distance forward from the vehicle V appears at the measurement position MP in the captured image I. The measurement position MP can be appropriately set. When the base-point mark M1 is detected at the measurement position MP of the captured image I, the base-point mark detecting unit 15 sets a detected position DP of the base-point mark M1 at the measurement position MP as the center of the base-point mark M1 in the extending direction of the guide line L as illustrated in FIG. 3(b).

Specifically, when the guide line L appears in the captured image I of the camera 2, the guide line detecting unit 11 detects a segment S constituting the guide line L from the captured image I using a technique such as pattern matching. When the guide line detecting unit 11 detects the segments S, the base-point mark detecting unit 15 measures a line width of the segment S at the measurement position MP of the captured image I. For example, when the measured line width is equal (substantially equal) to the line width of the segment S constituting the guide line L, the base-point mark detecting unit 15 determines that the detected segment S is not the base-point mark M1 but normal segments S constituting the guide line L. On the other hand, for example, when the measured line width is greater than the line width of the segments S constituting the guide line L, the base-point mark detecting unit 15 determines that the detected segment S is the base-point mark M1. As a result, the base-point mark M1 is detected.

When the base-point mark M1 has been detected from the captured image I, the positional relationship between the measurement position MP and the base-point mark M1 changes depending on the imaging time of the camera 2. When the positional relationship between the measurement position MP and the base-point mark M1 changes, the positional relationship between the detected position DP of the base-point mark M1 and the reference position of the base-point mark M1 also changes. As described above, the reference position of the base-point mark M1 serving as a base point for calculating the remaining distance is a specific position of the base-point mark M1 (the rear end of the base-point mark M1 in this embodiment) in the extending direction of the guide line L. Accordingly, a difference (an error) of the detected position of the base-point mark M1 from the reference position of the base-point mark M1 is a difference (an error) from the remaining distance registered in the memory.

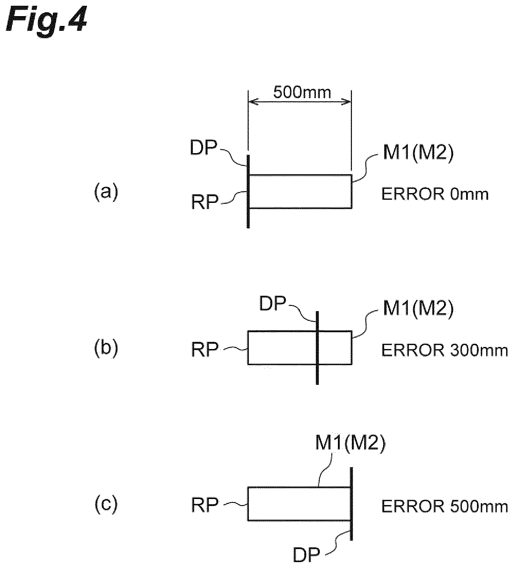

For example, as illustrated in FIGS. 4(a) to 4(c), it is assumed that the length of the base-point mark M1 in the extending direction of the guide line L is 500 mm and the rear end of the base-point mark M1 is the reference position RP of the base-point mark M1.

In FIG. 4(a), the rear end of the base-point mark M1 is located at the measurement position MP of the captured image I. In this case, the difference (error) of the detected position DP of the base-point mark M1 from the reference position RP of the base-point mark M1 is 0 mm. In FIG. 4(b), a position which is separated 300 mm from the rear end of the base-point mark M1 is located at the measurement position MP of the captured image I. In this case, the difference (error) of the detected position DP of the base-point mark M1 from the reference position RP of the base-point mark M1 is 300 mm. In FIG. 4(c), the front end of the base-point mark M1 is located at the measurement position MP of the captured image I. In this case, the difference (error) of the detected position DP of the base-point mark M1 from the reference position RP of the base-point mark M1 is 500 mm. In this way, when the detected position DP of the base-point mark M1 is not corrected, the maximum error is the length of the base-point mark M1 (500 mm) in the extending direction of the guide line L.

On the other hand, in this embodiment, the base-point mark detecting unit 15 sets the detected position DP of the base-point mark M1 at the measurement position MP as the center of the base-point mark M1 in the extending direction of the guide line L. In this case, the remaining distance to the scheduled stop position P of the vehicle V is expressed as the total sum of a distance from the reference position of the base-point mark M1 to the center of the base-point mark M1 in the extending direction of the guide line L and a distance from the center of the base-point mark M1 in the extending direction of the guide line L to the scheduled stop position P.

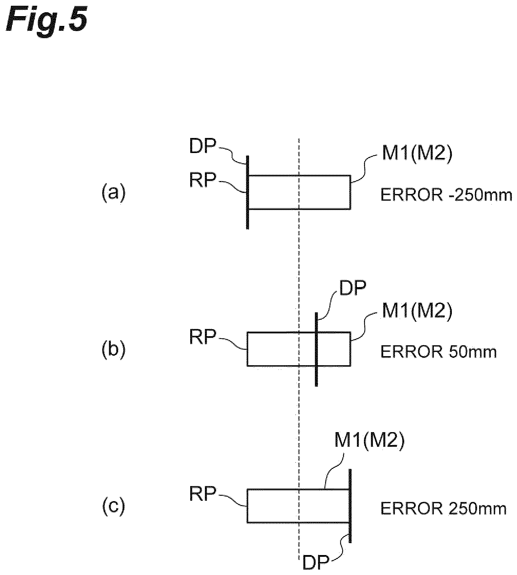

For example, as illustrated in FIGS. 5(a) to 5(c), it is assumed that the length of the base-point mark M1 in the extending direction of the guide line L is 500 mm and the rear end of the base-point mark M1 is the reference position RP of the base-point mark M1.

In FIG. 5(a), similarly to FIG. 4(a), the rear end of the base-point mark M1 is located at the measurement position MP of the captured image I. However, since the detected position DP of the base-point mark M1 is set as the center of the base-point mark M1 in the extending direction of the guide line L, the difference (error) of the detected position DP of the base-point mark M1 from the set center position is -250 mm. In FIG. 5(b), similarly to FIG. 4(b), a position which is separated 300 mm from the rear end of the base-point mark M1 is located at the measurement position MP of the captured image I. However, since the detected position DP of the base-point mark M1 is set as the center of the base-point mark M1 in the extending direction of the guide line L, the difference (error) of the detected position DP of the base-point mark M1 from the set center position is 50 mm. In FIG. 5(c), similarly to FIG. 4(c), the front end of the base-point mark M1 is located at the measurement position MP of the captured image I. However, since the detected position DP of the base-point mark M1 is set as the center of the base-point mark M1 in the extending direction of the guide line L, the difference (error) of the detected position DP of the base-point mark M1 from the set center position is 250 mm. By correcting the detected position DP of the base-point mark M1 in this way, the maximum error is curbed to being a length (250 mm) corresponding to half the length of the base-point mark M1 in the extending direction of the guide line.

When a correction base-point mark M2 is detected at the measurement position MP of the captured image I, the correction base-point mark detecting unit 16 sets the detected position of the correction base-point mark M2 at the measurement position MP as the center of the correction base-point mark M2 in the extending direction of the guide line L. Setting the detected position of the correction base-point mark M2 is the same as setting the detected position DP of the base-point mark M1 in the base-point mark detecting unit 15.

The remaining distance acquiring unit 12 acquires the remaining distance to the scheduled stop position P of the vehicle V on the basis of the position set by the base-point mark detecting unit 15, that is, the position of the center of the base-point mark M1 in the extending direction of the guide line L. Specifically, the total sum of the distance from the reference position of the base-point mark M1 to the center of the base-point mark M1 in the extending direction of the guide line L and the distance from the center of the base-point mark M1 in the extending direction of the guide line L to the scheduled stop position P is acquired as the remaining distance to the scheduled stop position P of the vehicle V. The remaining distance acquiring unit 12 corrects the remaining distance to the scheduled stop position P of the vehicle V on the basis of the position (the position of the center of the correction base-point mark M2 in the extending direction of the guide line L) corrected by the correction base-point mark detecting unit 16 and a correction factor which is calculated from a relationship between the distance from the base-point mark M1 to the correction base-point mark M2 and the summed distance obtained according to the rotation of the wheels of the vehicle V in the meantime.

### [Operation]

The operation of the driving assistance device 1 according to this embodiment will be described below.

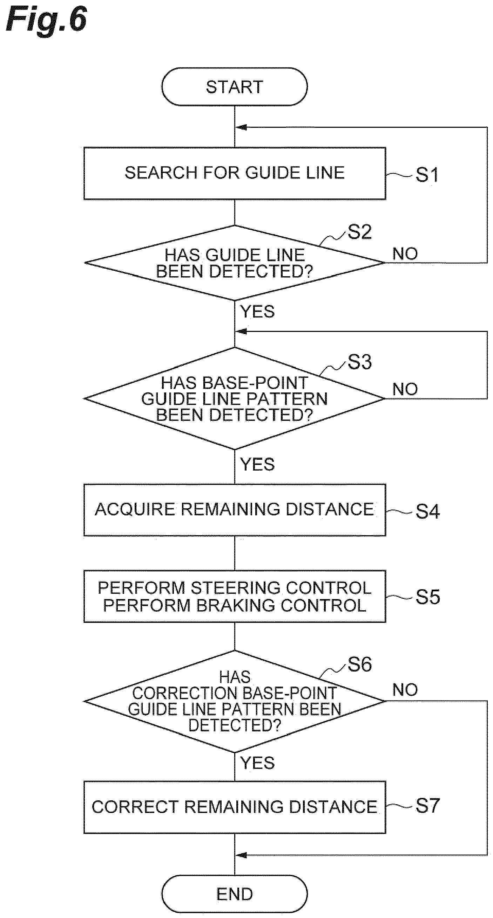

FIG. 6 is a flowchart illustrating the operation of the driving assistance device according to the embodiment. As illustrated in FIG. 6, the driving assistance device 1 searches for a guide line L (S1) and searches for a base-point mark M1 when it is determined that the guide line L has been detected (S2: YES).

When it is determined that the base-point mark M1 has been detected (S3: YES), the driving assistance device 1 acquires the remaining distance to the scheduled stop position P based on the base-point mark M1 (S4). In Step S4, the driving assistance device 1 sets the detected position DP of the base-point mark M1 at the measurement position MP as the center of the base-point mark M1 in the extending direction of the guide line L.

Then, the driving assistance device 1 controls steering of the vehicle V on the basis of the guide line L detected in Step S1 and controls deceleration of the vehicle V on the basis of the remaining distance acquired in Step S4 (S5). Then, the correction base-point mark M2 is searched for.

When it is determined that the correction base-point mark M2 has been detected (S6: YES), the driving assistance device 1 corrects the remaining distance on the basis of the position of the correction base-point mark M2 and the correction factor calculated from the relationship between the distance from the base-point mark M1 to the correction base-point mark M2 and the summed distance obtained according to the rotation of the wheels in the meantime, and continues to perform steering control and deceleration control (S7). When the correction base-point mark M2 has not been detected, steering control and deceleration control are continuously performed without correcting the remaining distance. When the vehicle V stops at the scheduled stop position P, the process flow ends.

As described above, in this embodiment, since the remaining distance acquiring unit 12 acquires the remaining distance on the basis of the base-point mark M1 detected by the guide line detecting unit 11, it is possible to accurately stop the vehicle V at the scheduled stop position P. When the base-point mark M1 is detected at the measurement position MP of the captured image I, the guide line detecting unit 11 sets the detected position DP of the base-point mark M1 at the measurement position MP of the captured image I as the center of the base-point mark M1 in the extending direction of the guide line L. Accordingly, even when the base-point mark M1 is detected only once due to a refresh rate of the camera 2, the set position of the base-point mark M1 is always the center of the base-point mark M1 in the extending direction of the guide line L. Accordingly, the maximum error of the detected position DP of the base-point mark M1 is a length corresponding to half the length of the base-point mark M1. Accordingly, it is possible to decrease the maximum error of the detected position DP of the base-point mark M1.

The guide line L is formed of a pair of dotted lines which are parallel to each other, and the base-point mark M1 is included in each of the pair of dotted lines. Accordingly, it is possible to easily distinguish the guide line L from other marking lines and to appropriately detect the base-point mark M1.

The base-point mark M1 has a line width greater than the line width of the segments S constituting the guide line L. Accordingly, it is possible to simplify the shape of the base-point mark M1 and to secure easy detection of the base-point mark M1 from the captured image I.

The remaining distance acquiring unit 12 corrects the remaining distance on the basis of the detected position of the correction base-point mark M2 detected by the guide line detecting unit 11 and the correction factor which is calculated from the relationship between the distance from the base-point mark M1 to the correction base-point mark M2 and the summed distance obtained according to the rotation of the wheels of the vehicle V in the meantime. Accordingly, it is possible to more accurately stop the vehicle V at the scheduled stop position P. When the correction base-point mark M2 is detected at the measurement position MP of the captured image I, the guide line detecting unit 11 sets the detected position DP of the correction base-point mark M2 at the measurement position MP of the captured image I as the center of the correction base-point mark M2 in the extending direction of the guide line L. Accordingly, even when the correction base-point mark M2 is detected only once due to a refresh rate of the camera 2, the set position of the correction base-point mark M2 is always the center of the correction base-point mark M2 in the extending direction of the guide line L. Accordingly, the maximum error of the detected position DP of the correction base-point mark M2 is a length corresponding to half the length of the correction base-point mark M2. Accordingly, it is possible to decrease the maximum error of the detected position of the correction base-point mark M2.

The steering control unit 14 controls steering of the vehicle V on the basis of the guide line L. Accordingly, it is possible to more accurately stop the vehicle V at the scheduled stop position P.

While an exemplary embodiment of the invention has been described above, the invention is not limited to the embodiment and may be modified without departing from the gist described in the appended claims or may be applied to another configuration.

For example, in the aforementioned embodiment, it is assumed that the detected position of the correction base-point mark M2 is corrected, but since the vehicle speed is sufficiently low at the time of detecting the correction base-point mark M2, the detected position of the correction base-point mark M2 may not be particularly corrected.

In the aforementioned embodiment, it is assumed that the camera images one base-point mark only once, but when the camera images one base-point mark a plurality of times and the base-point mark is detected at the measurement position of the captured image, the guide line detecting unit may set the detected position of the base-point mark at the measurement position as the center of the base-point mark in the extending direction of the guide line.

### Reference Signs List

- 1: Driving assistance device
- 2: Camera
- 3: Actuator
- 10: ECU
- 11: Guide line detecting unit
- 12: Remaining distance acquiring unit
- 13: Braking control unit
- 14: Steering control unit
- 15: Base-point mark detecting unit
- 16: Correction base-point mark detecting unit
- I: Captured image
- L: Guide line
- S: Segment
- M1: Base-point mark
- M2: Correction base-point mark
- P: Scheduled stop position
- RP: Reference position
- MP: Measurement position
- DP: Detected position
- V: Vehicle

## Claims

1. A driving assistance device that controls driving of a vehicle on the basis of a guide line leading to a scheduled stop position, the driving assistance device comprising:
a guide line detecting unit configured to detect the guide line from a captured image of a camera;
a remaining distance acquiring unit configured to acquire a remaining distance to the scheduled stop position of the vehicle; and
a braking control unit configured to control deceleration of the vehicle on the basis of the remaining distance acquired by the remaining distance acquiring unit such that the vehicle stops at the scheduled stop position,
wherein the guide line is constituted of a plurality of segments which are separated in an extending direction of the guide line and includes a base-point mark which is provided at a position which is separated a first distance from the scheduled stop position,
wherein the guide line detecting unit detects the base-point mark at a measurement position of the captured image, and sets a detected position of the base-point mark at the measurement position of the captured image as a center of the base-point mark in the extending direction of the guide line when the base-point mark is detected at the measurement position of the captured image, and
wherein the remaining distance acquiring unit acquires the remaining distance on the basis of the position of the base-point mark set by the guide line detecting unit.

2. The driving assistance device according to claim 1, wherein the guide line is formed of a pair of dotted lines which are parallel to each other, and
wherein the base-point mark is included in each of the pair of dotted lines.

3. The driving assistance device according to claims 1 or 2, wherein the base-point mark has a line width greater than a line width of the segments constituting the guide line.

4. The driving assistance device according to any one of claims 1 to 3, wherein the guide line includes a correction base-point mark that is provided at a position which is separated a second distance less than the first distance from the scheduled stop position,
wherein the guide line detecting unit detects the correction base-point mark at the measurement position of the captured image and sets a detected position of the correction base-point mark at the measurement position of the captured image as a center of the correction base-point mark in the extending direction of the guide line, and
wherein the remaining distance acquiring unit corrects the remaining distance on the basis of the detected position of the correction base-point mark set by the guide line detecting unit and a correction factor which is calculated from a relationship between a distance from the base-point mark to the correction base-point mark and a summed distance obtained according to rotation of wheels of the vehicle in the meantime.

5. The driving assistance device according to any one of claims 1 to 4, further comprising a steering control unit configured to control steering of the vehicle on the basis of the guide line acquired by the guide line detecting unit.

6. A traffic system comprising:
a guide line leading to a scheduled stop position; and
a driving assistance device configured to stop a vehicle at the scheduled stop position on the basis of the guide line,
wherein the guide line is constituted of a plurality of segments which are separated in an extending direction of the guide line and includes a base-point mark which is provided at a position which is separated a first distance from the scheduled stop position,
wherein the driving assistance device includes:
a guide line detecting unit configured to detect the guide line from a captured image of a camera;
a remaining distance acquiring unit configured to acquire a remaining distance to the scheduled stop position of the vehicle; and
a braking control unit configured to control deceleration of the vehicle on the basis of the remaining distance acquired by the remaining distance acquiring unit such that the vehicle stops at the scheduled stop position,
wherein the guide line detecting unit sets a position of the base-point mark detected at a measurement position of the captured image as a center of the base-point mark in the extending direction of the guide line when the base-point mark is detected at the measurement position of the captured image, and
wherein the remaining distance acquiring unit acquires the remaining distance on the basis of the position of the base-point mark set by the guide line detecting unit.
